# EUROPEAN PATENT APPLICATION

(11) **EP 4 417 064 A1**
(43) Date of publication of application: **21.08.2024**
(21) Application number: 21960734.8
(22) Date of filing: 05.11.2021
(51) Int. Cl.: A23L 29/20, A23P 30/20, A23L 29/00, A23L 33/00

(54) **ARTIFICIAL MEAT AND METHOD FOR MANUFACTURING ARTIFICIAL MEAT**

(30) Priority: 12.10.2021 KR 20210135323
(71) Applicant: Tissenbiofarm Co., Ltd., Pohang-si, Gyeongsangbuk-do 37563 (KR)
(72) Inventor: HAN, Wonil, Pohang-si, Gyeongsangbuk-do 37671 (KR); CHO, Dong-Woo, Seoul 05065 (KR); KWON, Yeongmun, Yongin-si, Gyeonggi-do 17038 (KR)
(74) Representative: Seymour-Pierce, Alexandra Isobel
(86) International application number: PCT/KR2021/015993
(87) International publication number: WO 2023/063468

(57) **Abstract**

A method of making an artificial meat according to a first embodiment of a present invention comprises: forming a first material being extruded in which a material for a taste of a lean meat is solubilized; obtaining at least one first extruded fiber in which the first material being extruded is extruded to have a length direction corresponding to an extrusion direction; forming a second material being extruded in which a material for a taste of fat is solubilized; obtaining at least one second extruded fiber in which the second material being extruded is extruded to have the length direction; and obtaining the artificial meat in which the at least one first extruded fiber and the at least one second extruded fiber are connected along the length direction.

## Description

### TECHNICAL FIELD

The present invention relates to an artificial meat and a method of making the artificial meat.

### BACKGROUND

In general, artificial meat refers to a food that is made to have a taste similar to meat. Artificial meat replaces part of a demand for livestock farming as part of a stable food supply, contributing to mitigating environmental pollution caused by livestock farming. In addition, some of the artificial meats are produced on the basis of non-animal ingredients, which contributes to meeting a need of vegetarians. For this reason, a demand for artificial meat is increasing day by day, and there is a need for a way to mass-produce it.

In making a large amount of artificial meat, it is generally mainly a method of culturing a large amount of aggregates that aggregate cells, or culturing them by seeding cells in a three-dimensional structure. However, the former method has been difficult to mass-produce in that it has to secure a large amount of cells. In addition, the latter method has difficulty in mass production because cells may be detached during culturing, and a large volume of a cell structure must be cultured for two or more weeks and cell viability must be maintained.

In addition, in an artificial meat according to the conventional methods, a taste result and marbling of an actual meat are not realized, so there is some difference from the taste and texture of the actual meat.

### DISCLOSURE

### [TECHNICAL PROBLEM]

A problem to be solved by the present invention is to provide a method for making an artificial meat having excellent mass productivity.

In addition, a problem to be solved by the present invention is to provide an artificial meat and a method of making thereof whose taste and texture are similar to actual meat.

Technical problems of the present invention are not limited to the above-mentioned technical problems, and other technical problems not mentioned may be clearly understood by those skilled in the art from a following description.

### [TECHNICAL SOLUTION]

A method of making an artificial meat according to a first embodiment of the present invention for solving the above problem comprises: forming a first material being extruded in which a material for a taste of a lean meat is solubilized, obtaining at least one first extruded fiber in which the first material being extruded is extruded to have a length direction corresponding to an extrusion direction, forming a second material being extruded in which a material for a taste of fat is solubilized, obtaining at least one second extruded fiber in which the second material being extruded is extruded to have the length direction and obtaining the artificial meat in which the at least one first extruded fiber and the at least one second extruded fiber are connected along the length direction.

Wherein the obtaining at least one first extruded fiber may comprise extruding the first material being extruded using at least one first nozzle.

Wherein the obtaining at least one second extruded fiber may comprise extruding the second material being extruded using at least one second nozzle.

Wherein the artificial meat may be configured to have a pattern formed by the at least one first extruded fiber and the at least one second extruded fiber on a cross section cut so as to intersect in the length direction and wherein the pattern is determined based on an arrangement of the at least one first nozzle and the at least one second nozzle.

The method may further comprise obtaining at least one piece of artificial meat having marbling based on the pattern when the artificial meat is cut to intersect the length direction.

Wherein the obtaining the first extruded fiber may comprise obtaining cross-linked the first material being extruded by spraying a cross-linking agent on the first material being extruded that has passed through the first nozzle.

Wherein the obtaining the second extruded fiber may comprise obtaining cross-linked the second material being extruded by spraying the cross-linking agent on the second material being extruded that has passed through the second nozzle.

Wherein the obtaining the first extruded fiber may comprise obtaining cross-linked the first material being extruded by immersing the first material being extruded that has passed through the first nozzle in crosslinking agent.

Wherein the obtaining the second extruded fiber may comprise obtaining cross-linked the second material being extruded by immersing the second material being extruded that has passed through the second nozzle in crosslinking agent.

Wherein the obtaining the first extruded fiber may comprise obtaining cross-linked the first material being extruded by exposing the first material being extruded that has passed through the first nozzle to an environment for gelation.

Wherein the obtaining the second extruded fiber may comprise obtaining cross-linked the second material being extruded by exposing the second material being extruded that has passed through the second nozzle to an environment for gelation.

Wherein the obtaining the artificial meat may comprise connecting the at least one first extruded fiber and the at least one second extruded fiber along the length direction by applying an adhesive to the at least one first extruded fiber and the at least one second extruded fiber.

Wherein the obtaining the artificial meat comprises connecting the at least one first extruded fiber and the at least one second extruded fiber along the length direction by immersing the first extruded fiber and the second extruded fiber in an adhesive.

Wherein the at least one first extruded fiber and the at least one second extruded fiber may be connected by cultured cells and wherein the cultured cells are cultured in a state where the at least one first extruded fiber and the at least one second extruded fiber are arranged along the length direction.

The method may further comprise forming a third material being extruded in which a material for additives including at least one nutrient and medicinal ingredient is solubilized and obtaining at least one third extruded fiber in which the third material being extruded to have the length direction.

Wherein the at least one first extruded fiber, the at least one second extruded fiber and the at least one third extruded fiber may be connected along the length direction.

A method of making an artificial meat according to a second embodiment of the present invention for solving the above problem may comprise: obtaining an edible fiber in which a material for a taste of lean meat is processed into a fiber form and forming the artificial meat including a structure similar to a bundle structure of muscle fibers in an actual meat by folding at least one edible fiber or connecting a plurality of the edible fibers in a bundle form.

The method may further comprise obtaining a fat unit in which a material for a taste of fat is gelled or crosslinked.

Wherein the forming the artificial meat may comprise combining the at least one edible fiber and the at least one fat unit and forming the artificial meat which is configured to have a marbling of an actual meat based on a pattern formed by the combination.

Wherein the fat unit may be obtained by being processed in a fiber form.

Wherein the artificial meat may be formed by combination of the edible fiber structure and the fat structure, wherein the edible fiber structure is configured to fold the at least one of the edible fibers or connect a plurality of the edible fibers in a bundle form, and wherein the fat structure is configured to fold the at least one of the fat units or connect a plurality of the fat units in the bundle form.

Wherein the forming the artificial meat may comprise changing a pattern formed by a combination of the edible fiber and the fat unit based on a portion of the actual meat to be simulated; and forming the artificial meat which is configured to have a marbling based on the pattern.

The method may further comprise encapsulating cells of a pre-determined animal in the material for a taste of the lean meat such that characteristics of the artificial meat are similar to characteristics of the meat from the pre-determined animals.

An artificial meat according to a first embodiment of the present invention for solving the above problem may comprise: at least one first extruded fiber having length direction corresponding to an extrusion direction which is formed by extruding a first material being extruded in which a first material of the artificial meat is solubilized and at least one of second extruded fibers having length direction corresponding to an extrusion direction which is formed by extruding a second material being extruded in which a second material of the artificial meat is solubilized, wherein the artificial meat is formed by connecting at least one of the first extruded fibers and at least one of the second extruded fibers along the length direction.

An artificial meat according to a second embodiment of the present invention for solving the above problem may comprise at least one edible fiber formed by processing a material for a taste of lean meat into a fiber form.

At least a portion of the artificial meat may be formed by folding at least one of the edible fibers or connecting a plurality of the edible fibers in a bundle form to make the artificial meat include a structure similar to a bundle structure by muscle fibers in actual meat.

The artificial meat may further comprise a fat unit in which a material for a taste of fat is gelled or crosslinked.

Wherein the artificial meat may be formed by folding the at least one edible fiber or connecting a plurality of the edible fibers in a bundle form such that a structure of the artificial meat is similar to a bundle structure of muscle fibers of actual meat.

Other details of the present invention are included in the detailed description and drawings.

### [ADVANTAGEOUS EFFECTS]

According to embodiments of the present invention, there is at least the following effects.

It is possible to mass-produce an artificial meat having a desired taste by a producer and/or a consumer.

It is possible to obtain an artificial meat having a taste and a texture similar to actual meat.

Effects according to the present invention are not limited by contents exemplified above, and more various effects are included in the present specification.

### [DESCRPTION OF DRAWINGS]

FIG. 1 is a schematic drawing of an actual meat.
FIG.2 is a flowchart of a method of making an artificial meat according to a first embodiment of the present invention.
FIG.3 is a flowchart of a case in which a step of forming a material being extruded in which a material is solubilized according to a first embodiment of the present invention comprises a forming first material being extruded and a forming second material being extruded.
FIG.4 is a flowchart of a case in which a step of obtaining an extruded fiber according to a first embodiment of the present invention comprises a obtaining a first extruded fiber and a obtaining a second extruded fiber.
FIG.5 is a schematic drawing of extruding an extruded fiber using an extruding apparatus according to a first embodiment of the present invention.
FIG.6 is a photograph of an extruded fiber extruded by extruding apparatus according to a first embodiment of the present invention.
FIG.7 is a schematic drawing of making an artificial meat using an extruding apparatus according to a second embodiment of the present invention.
FIG.8 is a schematic drawing of an artificial meat made by an extruding apparatus according to a second embodiment of the present invention and an artificial meat piece cut from the artificial meat.
FIG.9 is a flowchart of a method of making an artificial meat according to a second embodiment of the present invention.
FIG. 10 is a flowchart of a case in which a step of forming a material being extruded in which a material is solubilized according to a second embodiment of the present invention comprises a forming first material being extruded and a forming second material being extruded.
FIG. 11 is a flowchart of a case in which a step of obtaining an extruded fiber according to a second embodiment of the present invention comprises a obtaining a first extruded fiber and a obtaining a second extruded fiber.
FIG. 12 is a flowchart of a method of making an artificial meat according to a third embodiment of the present invention.
FIG. 13 is a schematic drawing of examples of a fat unit which may be used in a method of making an artificial meat according to a third embodiment of the present invention.
FIG. 14 is a photograph of an edible fiber structure body made according to a third embodiment of the present invention.
FIG. 15 is a photograph of an artificial meat made according to a third embodiment of the present invention.

### [MODES OF THE INVENTION]

Advantages and features of the invention, and methods of achieving them, will be apparent by reference to embodiments described in detail below in conjunction with accompanying drawings. However, the present invention is not limited to the embodiments disclosed below but may be realized in various forms different from each other, and the present embodiments are provided to ensure the disclosure of the present invention is complete, and to completely inform to those skilled in the art to which the present invention belongs, and the present invention is defined only by the category of the claims.

Also, embodiments described herein will be described with reference to cross-sectional views and/or schematic views, which are ideal exemplary views of the present invention. Therefore, the shape of the exemplary view may be modified by making techniques and/or tolerances, etc. In addition, each component in each drawing shown in the present invention may be shown enlarged or reduced in consideration of convenience of description. Throughout the specification, the same reference numerals refer to the same components.

The term "Artificial meat" used in the present invention refers to an artificial meat produced by humans. The artificial meat should be understood as a concept including a culture meat made by culturing cells and an alternative meat made by processing an edible material.

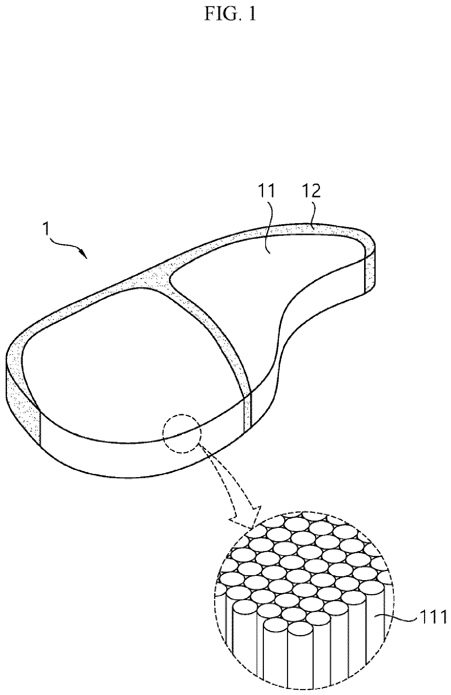

Before describing the present invention, in order to help understand the present invention, characteristics of actual meat will first be described with reference to FIG 1. FIG.1 is a schematic drawing of an actual meat. As shown in FIG 1, an actual meat can be largely distinguished into a lean portion(11) and a fat portion (12).

The lean part(11) refers to a portion formed on the basis of muscle fibers(111) in the meat. As shown in FIG. 1, the lean portion(11) of an actual meat(1) includes a plenteous number of muscle fibers(111) arranged in bundle form. A taste and texture of the lean meat portion(11) is affected by composition, size and / or arrangement of these muscle fibers(111).

The fat portion(12) is a portion that constitutes marbling in an actual meat(1). In actual meat(1), content of fat(12) varies by parts. This is because parts with large motility have relatively little accumulation of fat, and parts with small motility have relatively large accumulations of fat. This difference in the content of the fat portion (12) greatly affects a taste of an actual meat(1). This is because, in general, meat having a higher the content of the fat portion(12), the softer a texture and the more savory a taste.

Hereinafter, a method of making an artificial meat according to a first embodiment of the present invention and an artificial meat made therethrough will be described with reference to the drawings for explaining the present invention based on the above description.

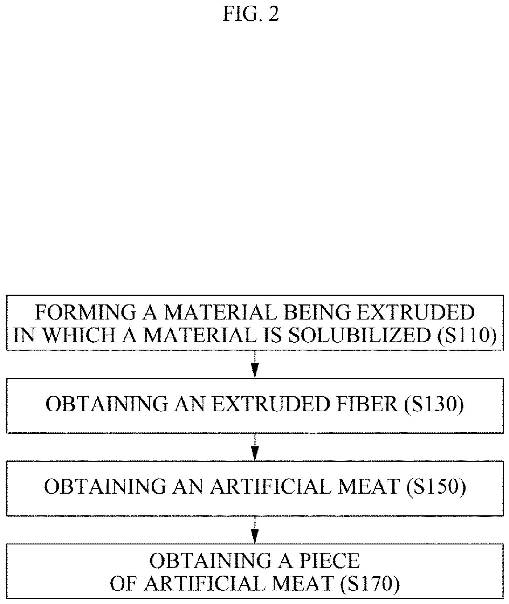

FIG.2 is a flowchart of a method of making an artificial meat according to a first embodiment of the present invention. As shown in FIG 2, the method of making an artificial meat according to the first embodiment of the present invention may comprise forming a first material being extruded in which a material for a taste of a lean meat is solubilized(S110), obtaining an extruded fiber(S130), obtaining an artificial meat(S150), and obtaining a piece of artificial meat(S 160).

In the forming a material being extruded in which a material is solubilized(S110), a material being extruded is obtained in a state of sol and/or gel by solubilization of material of the artificial meat. For example, in this step, the material of the artificial meat may be dissolved with an appropriate solvent and processed into a gel state. Alternatively, in this step, the material of the artificial meat may be processed into a sol state using an appropriate dispersion medium.

Hereinafter, for convenience of description, it will be described that a material in a hydrogel state is formed in a forming a material being extruded in which a material is solubilized(S 110). However, it is not limited thereto, and as described above, the materials may be variously processed into sols and/or gel states. In addition, those skilled in the art will be able to make an artificial meat using various processed materials based on the following description.

The materials used in this step may be distinguished into materials for forming hydrogels having extrudable physical properties (hereinafter referred to as 'basic materials'), materials for simulating taste (hereinafter, 'flavor materials'), and selectively addable materials (hereinafter 'added materials'). However, when a hydrogel having extrudable physical property can be obtained only with the flavor material, the hydrogel may be formed only with the flavor material.

For example, basic materials may be prepared as edible materials such as alginate, agarose, xanthan gum, guar gum, gum arabic, carrageenan, gelatin, collagen, and the like.

For example, flavor materials may be selected as materials for a taste of lean meat, materials for a taste of fat, materials for a taste of processed meat, and/or materials for a taste of other foods. Here, other foods may include not only meat and appendages of meat, but also edible foods such as fish, fruits, vegetables, and cooked dishes, without limitation. Specific examples of flavor materials are described below.

The added material may be a functional material that may be added as needed. For example, the added material may be nutrients, medicinal ingredients, etc.

Meanwhile, at least one of the basic material, the flavor material, and the added material, used to form the hydrogel may include a material that does not dissolve at pH 7 such as a polymer collagen or a textured soy protein (TSP). In such a case, an acidic or basic solvent may be used for an operation with the hydrogel. Therefore, the hydrogel produced may not be neutral in some cases. In this case, if a user requests neutralization of the hydrogel such as in regulations on food manufacturing, such as a country in which it is to be sold and/or manufactured, the user may add an appropriate acidic and/or basic substance to the hydrogel in this step to neutralize it.

In the obtaining the extruded fiber(S 130), a user obtains the extruded fiber by extruding a solubilized material being extruded using an extruding apparatus. The extruded fibers extruded by the extruding apparatus have a length direction corresponding to an extrusion direction.

Here, the extruding apparatus may extrude a hydrogel through a fine diameter or a fine gap. For example, the extruding apparatus may have a at least of fine extrusion and/or fine gap. For example, the extruding apparatus may be provided by an apparatus comprising a plurality of nozzles, a 3D printer comprising a plurality of nozzles, etc.

In addition, in obtaining the extruded fiber(S130), the extruded fiber extruded in the hydrogel state may be crosslinked and/or gelled.

A crosslinking agent used for crosslinking the material being extruded may be appropriately selected according to the material composition of the hydrogel. In addition, a user may gel the material being extruded through heating/cooling and/or acid-base reaction in consideration of the composition of the material being extruded.

The crosslinking to the extruded fibers may be realized in a variety of ways. For example, a user may crosslink the extruded fiber by spraying an aerosol crosslinking agent toward the extruded fiber. As another example, a user may crosslink the extruded fiber by immersing it in a crosslinking agent in solution.

For example, in the extruded fiber comprising alginate, a user may expose the extruded fiber to an aqueous solution and/or aerosol comprising a sufficient concentration (1 to 200 mM) of calcium ions.

Alternatively, in the extruded fibers comprising proteins such as gelatin, collagen, etc, a user may expose the extruded fibers to an aqueous solution and/or aerosol comprising a sufficient concentration of genipin, glutaraldehyde, transglutaminase, etc.

In the obtaining an artificial meat, a plurality of extruded fibers is arranged in a bundle form and then connected to form artificial meat. In this step, a method of connecting the extruded fibers may be exemplified by using an adhesive and cell culture.

The method of connecting the extruded fibers using an adhesive connects a plurality of extruded fibers in a bundle form using an adhesive. For example, a user may connect the extruded fibers by applying an adhesive to the surface of the extruded fibers or by immersing the extruded fibers in the adhesive.

The method of applying the adhesive may be realized by applying a liquid adhesive to the surface of the extruded fiber, or by spraying an aerosol adhesive onto the surface of the extruded fiber.

Also, for example, the method of immersing the adhesive may be realized by connecting the plurality of extruded fibers in a bundle form in a state of immersing the plurality of extruded fibers in a bowl or the like comprising the liquid adhesive.

For example, the extruded fibers to which the adhesive is applied or immersed in the adhesive may be connected in a bundle form by applying pressure to adhere to each other for 10 minutes to 300 minutes under temperature conditions of 4° C to 40° C.

Meanwhile, the adhesive used in this step may be provided as an edible adhesive and/or an edible crosslinking agent that are composed of an edible component.

For example, the edible adhesive may be an adhesive composed of cyanoacrylate-based adhesive, a polyurethane-based adhesive, a fibrin glue, a gelatin glue, and/or other edible ingredients.

For example, the edible crosslinking agent may be a chemical crosslinker composed of genipin, glutaraldehyde, and/or other edible ingredients.

The method of connecting the extruded fibers using cell culture may be realized by applying a hydrogel uniformly encapsulated with cells capable of connecting the extruded fibers (hereinafter, referred to as 'connective cells') on the surface of the extruded fibers, or by immersing the extruded fibers in an aqueous solution in which the connective cells are mixed and then culturing the cells.

The cells located on the surface of the extruded fibers by the above-described method are then cultured and grown to form a cell structure connecting a plurality of fiber bundles. The culture of connective cells may be the same or similar to the culture conditions of cells and/or tissues in general (hereinafter referred to as 'general culture conditions').

When a cell having excellent extracellular matrix productivity is selected as the connective cell, a user may culture the connective cell under general culture conditions for about 6 hours or more so that a cell structure is formed. For example, such connective cells may be at least one of fibroblasts, mesenchymal stem cells, myofibroblasts, and other cells having active extracellular matrix productivity.

Alternatively, when cells whose extracellular matrix production is not active are selected as the connective cells, a user may culture the connective cells for about 12 hours or more under general culture conditions to form a cell structure.

In the obtaining a piece of artificial meat, the piece of artificial meat is cut in a direction crossing a length direction. The piece of artificial meat may mean each piece obtained by cutting artificial meat. This step may be effective when mass production of artificial meat is desired in particular.

In the comprising this step for mass production, a user may form a length of the extruded fiber to be very long in the obtaining the extruded fiber(S 130). Thereafter, the artificial meat formed through the obtaining the artificial meat(S150) is divided into several pieces as necessary in this step. The user may divide the artificial meat such that a plurality of pieces of artificial meat have a constant thickness or cut the artificial meat such that at least some of the pieces of artificial meat have different thicknesses.

Meanwhile, in the method of making an artificial meat according to the first embodiment of the present invention, an artificial meat may be made by using materials for different tastes so that the made artificial meat has a complex taste in which at least two or more tastes are mixed.

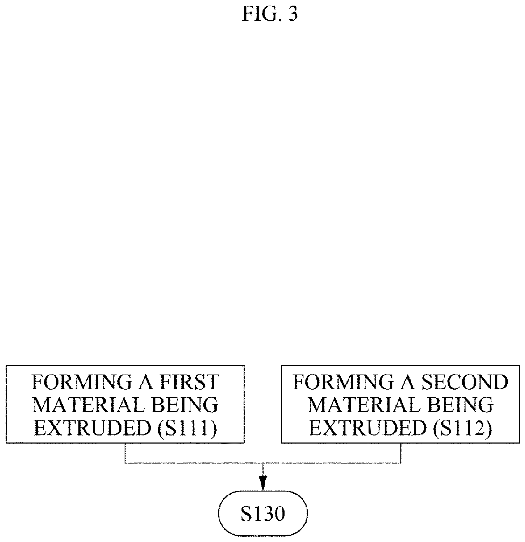

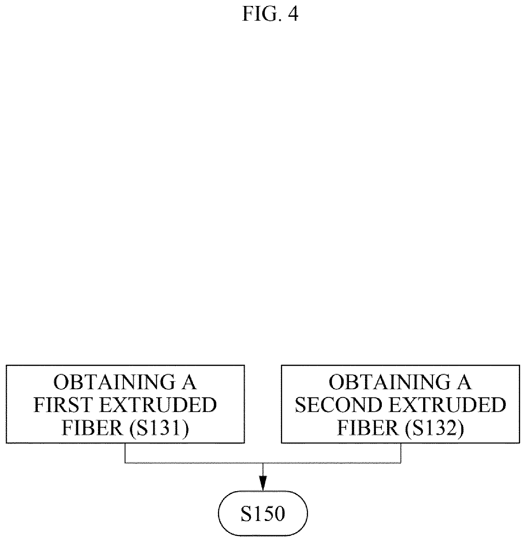

Hereinafter, with reference to FIG. 3 and FIG.4, a method of making an artificial meat according to the first embodiment of the present invention to make artificial meat having a complex taste will be described. For convenience of description, it is described that one of the two or more tastes is a taste of a lean meat and the other is a taste of fat, but the present invention is not limited thereto. For example, each of the two tastes may be any one of tastes of various food, such as not only meat and appendages of meat, but also fish, fruit, vegetables, cooked cooking, etc.

FIG.3 is a flowchart of a case in which a step of forming a material being extruded in which a material is solubilized according to the first embodiment of the present invention comprises a forming first material being extruded and a forming second material being extruded.

In the forming a first material being extruded(S 111), the first material constituting the artificial meat is processed into the first material being extruded in a hydrogel state. For example, the first material being extruded may be selected for simulating a taste of a lean meat.

Specifically, the first material may comprise a flavor material for a taste of a lean meat and a basic material. Alternatively, when a hydrogel being extrudable can be obtained only with the flavor material, the first material may be formed without the basic material. In addition, as necessary, the first material may further comprise added materials comprising medicinal ingredients, nutrients, etc.

The flavor material for a taste of a lean meat may be at least one of heme, hemoglobin, myoglobin, leghemoglobin, cysteine, and other material for a taste of a lean meat.

Here, the cysteine is an amino acid related to the Maillard reaction occurring in a meat when the meat is cooked, and when comprised in the first material, the made artificial meat has the advantage of simulating the flavor of cooked meat.

In the forming a second material being extruded(S112), the second material constituting the artificial meat is processed into the second material being extruded in a hydrogel state. For example, the second material may be selected for simulating a taste of a fat.

Specifically, the second material may comprise a flavor material for a taste of fat and a basic material. Alternatively, when a hydrogel being extrudable can be obtained only with the flavor material, the second material may be formed without the basic material. In addition, as necessary, the second material may further comprise added materials comprising medicinal ingredients, nutrients, etc.

The flavor material for a taste of a fat may be at least one of a lard oil, a canola oil, a palm oil, a sunflower oil, a lipid, a fat, and other material for a taste of a fat.

Meanwhile, FIG.4 is a flowchart of a case in which a step of obtaining an extruded fiber according to a first embodiment of the present invention comprises a obtaining a first extruded fiber and a obtaining a second extruded fiber.

In the obtaining a first extruded fiber(S 131), a first material being extruded is located in an extruding apparatus and extruded to obtain a first extruded fiber. In this case, the extruding apparatus may comprise a plurality of first nozzles in which the first material being extruded is extruded. In this step, a user extrudes the first extruded fiber using the extruding apparatus and determines a length of the first extruded fiber as necessary.

In the obtaining a second extruded fiber(S 132), a second material being extruded is located in an extruding apparatus and extruded and crosslinked to obtain a second extruded fiber. In this case, the extruding apparatus may comprise a plurality of second nozzles in which the second material being extruded is extruded. In this step, a user extrudes the second extruded fiber using the extruding apparatus and determines a length of the second extruded fiber as necessary.

Meanwhile, although not shown, the method of making the artificial meat according to the first embodiment may further comprise a forming a third material being extruded in which the added material is solubilized and a obtaining a third extruded fiber.

In the forming a third material being extruded in which the added material is solubilized, the added material is hydrogenated in the same or similar wat as the first material being extruded or the second material being extruded. In this case, the added material may be a medicinal ingredient and/or a nutrient selected in response to the needs of a consumer or the prospective consumer.

In addition, obtaining the third extruded fiber may proceed the same as or similar to the obtaining the first extruded fiber(S 131) and/or the obtaining the second extruded fiber(S 132).

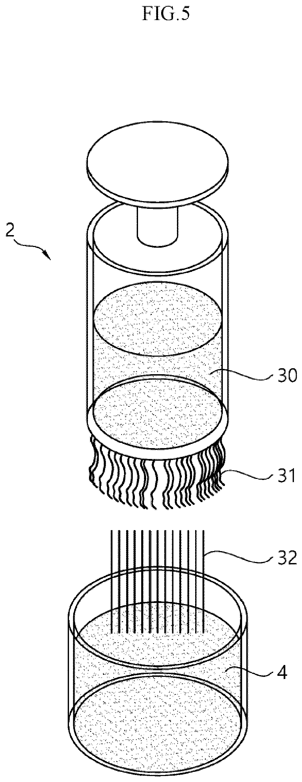

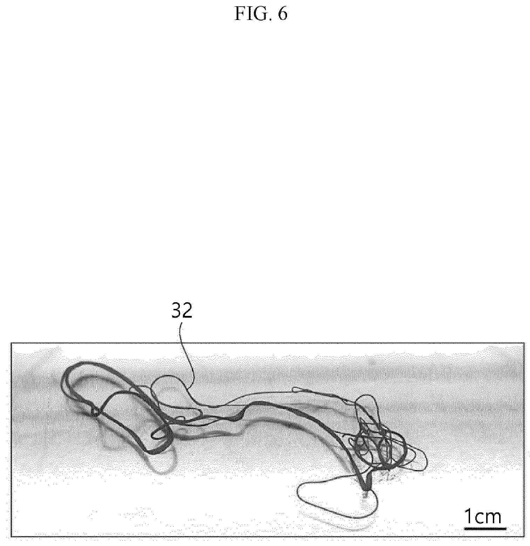

Hereinafter, based on the above description, referring to FIG.5 to 6, it will be described that obtaining an extruded fiber(S 130) and obtaining an artificial meat(S 150) are proceeded using the extruding apparatus according to the first embodiment. FIG.5 is a schematic drawing of extruding an extruded fiber using an extruding apparatus according to the first embodiment of the present invention. FIG.6 is a photograph of an extruded fiber extruded by extruding apparatus according to the first embodiment of the present invention.

The extruding apparatus(2) according to the first embodiment is able to extrude a hydrogel(30) disposed inside in a fiber form through a plurality of nozzles (not shown). Specifically, the extruding apparatus(2) may comprise a receiving space for receiving the hydrogel(30) processed with a material therein and a plurality of nozzles for extruding the hydrogel(30) in the receiving space.

A diameter of the nozzle of the extruding apparatus(2) may be set so that the extruded fibers have a diameter similar to that of muscle fibers. Specifically, the nozzle of the extruding apparatus(2) may be formed to have an inner diameter within a range of 5 µm to 3000 µm. In addition, the extruding apparatus(2) may comprise about 10,000 or more nozzles so that a large amount of extruded fibers at one time is possible. However, this is an exemplary numerical value, and a number of nozzles comprised in the extruding apparatus(2) may vary.

Meanwhile, in the forming a material being extruded(S 110), a user may form a material before gelation to have a complex modulus within a range of 0.01 Pa to 30 kPa. In addition, a user may form a hydrogel(30) after gelation to have a complex modulus within a range of 1 Pa to 100 MPa.

This is because, when the complex modulus is lower than to the above-described range, the gel is too soft and difficult to extrude. Conversely, this is because, when the complex modulus is higher than to the above-described range, the extruded fiber has hard properties unlike meat.

When a user extrudes the hydrogel(30) into the extruding apparatus(2), the extruded fibers(31) that have not yet been crosslinked or gelled are discharged through the nozzle. A user may crosslink the extruded fiber(31) by spraying the crosslinking agent to the nozzle side of the extruding apparatus(2). Alternatively, a user may gel the extruded fiber(31) by exposing the extruded fiber(31) to an environment for gelation (hereinafter, referred to as a "gelation environment"). For example, a user may cool or heat the extruded fibers or immerse them in a medicament at a specific pH.

Thereafter, the gelled or crosslinked extruded fibers(32) are dropped into a bowl(4) containing an aqueous adhesive solution below the extruding apparatus(20) Referring to FIG.6, the gelled or crosslinked extruded fiber(32) has a length proportional to the extrusion duration and falls into the bowl(4). Thus, a user is able to adjust a run time of the extruding apparatus(2) to obtain extruded fibers(32) of varying lengths.

The obtaining an artificial meat(S150) is processed by connecting the extruded fibers(32) dropped into the bowl(4) by a user to each other. A user obtain the artificial meat by folding extruded fibers(32) or connecting to each other in a bundle form.

For example, if a user desires to make an artificial meat having only a lean meat part, the user may proceed with the above-described operation after locating the first material being extruded in the extruding apparatus(2).

Similarly, if a user desires to make an artificial meat having only a fat part, the user may proceed with the above-described operation after locating the second material being extruded in the extruding apparatus(2).

Alternatively, when a user desires to make an artificial meat having a complex taste by using the extruding apparatus(2), the user may sequentially proceed with the obtaining the first extruded fiber(S 131) and the obtaining the second extruded fiber(S132) by using one extruding apparatus(2).

Alternatively, when a user desires to comprise the third extruded fibers in the artificial meat, the user may extrude the third extruded fibers from which the third material being extruded is extruded by using the extruding apparatus(2). For example, the user may sequentially proceed with the obtaining first extruded fiber(S 131), the obtaining second extruded fiber(S 132), and the obtaining the third extruded fiber with one extruding apparatus(2).

A user may proceed the obtaining the first extruded fiber(S 131), the obtaining the second extruded fiber(S 132), and the obtaining the third extruded fiber, at the same time or at the different time by the different extruding apparatus(2) respectively. In this case, in consideration of structural characteristics of a lean meat part and a fat part in an actual meat, a diameter of the nozzle of the extruding apparatus(2) from which the second extruded fiber is extruded may be larger than a diameter of the nozzle of the extruding apparatus(2) from which the first extruded fiber is extruded. This may be because the first extruded fibers need to be extruded in the form of very thin fibers to simulate muscle fibers of an actual meat, while the second extruded fibers simulate fats with a relatively large structure in an actual meat.

After extruding the first extruded fiber and the second extruded fiber, the obtaining an artificial meat(S150) may be proceeded by assembling the first extruded fiber and the second extruded fiber. In this case, when the third extruded fiber is extruded in the above-described step, the first extruded fiber, the second extruded fiber, and the third extruded fiber are assembled.

Specifically, a user may make an artificial meat by arranging a plurality of first extruded fibers and a plurality of second extruded fibers (or a plurality of first extruded fibers, a plurality of second extruded fibers, and a plurality of third extruded fibers) along a length direction based on an extrusion direction and then adhering to each other. In this case, the artificial meat is formed marbling according to the pattern by combination of the first extruded fiber and the second extruded fiber on a cross section to the length direction.

As another example, a user may obtain an artificial meat having marbling by making a lean part and a fat part separately and then assembling it. In this case, the user forms an edible fiber structure by folding at least one first extruded fiber or connecting the plurality of first extruded fibers in a bundle form. In addition, the user forms a fat structure by folding at least one second extruded fiber or connecting the plurality of second extruded fibers in a bundle form. Thereafter, the user may make an artificial meat having marbling by assembling at least one edible fiber structure and at least one fat structure.

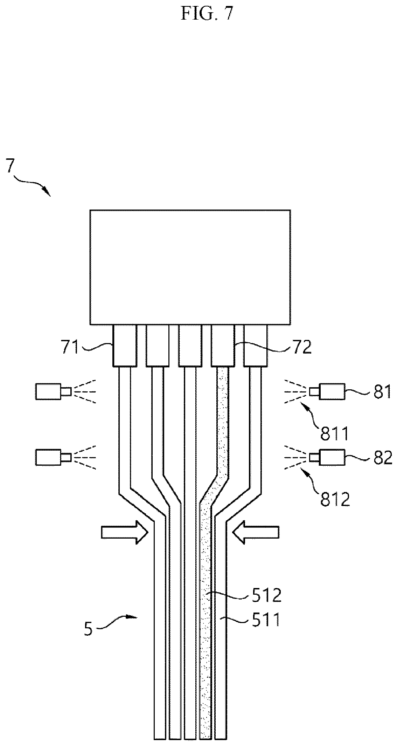

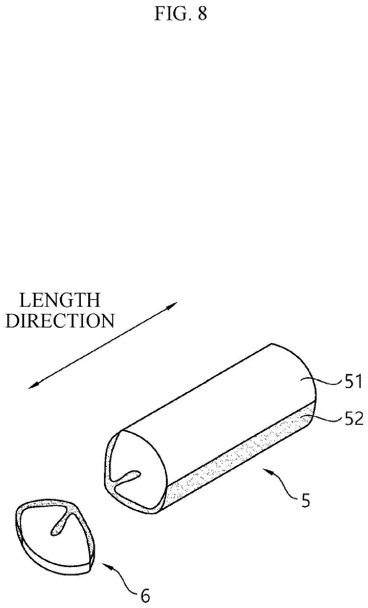

Hereinafter, based on the above description, referring to FIG.7 to 8, it will be described that obtaining an extruded fiber using an extruding apparatus according to the second embodiment(S130), obtaining an artificial meat(S 150), and obtaining a piece of artificial meat(S 160) are proceeded. FIG.7 is a schematic drawing of making an artificial meat using an extruding apparatus according to the second embodiment of the present invention. FIG.8 is a schematic drawing of an artificial meat made by an extruding apparatus according to the second embodiment of the present invention and an artificial meat piece cut from the artificial meat.

As shown in FIG.7, the extruding apparatus(7) is provided to simultaneously extrude the first extruded fiber(511) and the second extruded fiber(512). Specifically, the extruding apparatus(7) may separates and receives the first material being extruded and the second material being extruded, and be formed a plurality of nozzles selectively extrude either the first material being extruded or the second material being extruded, respectively. For example, the extruding apparatus(7) may comprise a receiving portion for separately receiving the first material being extruded and the second material being extruded, and a valve for selectively connecting each of the receiving portion and the plurality of nozzles. In this case, an inner diameter of the nozzle may be the same as or similar to the nozzle of the extruding apparatus(2), and thus a detailed description thereof will be omitted.

Therefore, in the using the extruding apparatus(7) of FIG.7, the obtaining the first extruded fiber (S131) and the obtaining the second extruded fiber(S 132) may be proceeded simultaneously. Hereinafter, for convenience of description, a nozzle for extruding a first material being extruded is referred to as a first nozzle(71), and a nozzle for extruding a second material being extruded is referred to as a second nozzle(72). However, because each of the nozzles may extrude the first material being extruded or the second material being extruded according to a user's setting, the nozzle of the extruding apparatus(7) may be the first nozzle(71) or the second nozzle(72) as determined by the user.

The extruding apparatus(7) may comprise a crosslinking agent spraying apparatus(81), an adhesive spraying apparatus(82), and a contact frame (not shown) to automate the production of artificial meat.

The crosslinking agent spraying apparatus(81) sprays a crosslinking agent(811) toward the discharge side of a plurality of nozzles. As a result, the extruded fibers passing through the nozzle are exposed to the crosslinking agent in the process of descending by an extruded force and become crosslinked.

When the method of making an artificial meat according to the first embodiment of the present invention is proceeded by using the extruding apparatus(7) according to the second embodiment, the obtaining an artificial meat(S 150) may be proceeded by spraying an adhesive(812) onto the first extruded fiber(511) and the second extruded fiber(522) by an adhesive spraying apparatus(82).

Here, the adhesive spraying apparatus(82) sprays an adhesive onto a crosslinked extruded fiber. The extruded fibers sprayed with adhesive may descend and enter the contact frame (not shown).

The contact frame is formed to have a smaller diameter of the outlet than the inlet, and the first extruded fiber(511) and the second extruded fiber(512) to which the adhesive is applied are adhered in the direction of the arrow shown in FIG.7 naturally in a process of passing through the contact frame and form an artificial meat(5).

The artificial meat(5) thus formed has a shape similar to that of FIG.8. Referring to FIG.8, the artificial meat(5) is formed with a lean meat part(51) in which the first extruded fibers(511) are dense and a fat part(52) in which the second extruded fibers(512) are dense.

Further, as shown in FIG.8, marbling is formed according to a pattern by combination of the first extruded fiber(511) and the second extruded fiber(512) on a cross section cut in a direction crossing the length direction.

Because the marbling is formed by a combination pattern of the first extruded fiber(511) and the second extruded fiber(512), a user may change a shape of the marbling by setting an arrangement of the nozzle extruding the first material being extruded(71) and the nozzle extruding the second material being extruded(72). In addition, a user may adjust a fat content of an artificial meat(5) by adjusting ratio of the nozzle extruding the first material being extruded(71) and the nozzle extruding the second material being extruded(72).

Thereafter, obtaining a piece of artificial meat(S 160) is proceeded by cutting an artificial meat(5) in a direction crossing the length direction. A user make a plurality of artificial meat pieces(6) by cutting the artificial meat(5) several times along the length direction. For example, the length of the artificial meat(5) may be approximately several meters or tens of meters or more, and tens to thousands or more of the artificial meat pieces(6) may be produced at one time by cutting the artificial meat(5).

Meanwhile, in the above-described example, the extruding apparatus(7) according to the second embodiment sprays a crosslinking agent(811) to crosslink the material, but the present invention is not limited thereto.

For example, the extruding apparatus(7) may have a section that constitutes a gelation environment. For example, the extruding apparatus(7) may cool (or heat) the extruded fiber by immersing the extruded fiber in an aqueous solution at a specific temperature or lower (or higher) for a preset time. For alternatively example, the extruding apparatus(7) may transport through a tray below (or above) a certain temperature to cool (or heat) the extruded fibers.

Meanwhile, in the above-described example, a nozzle of the extruding apparatus(7) selectively extrudes any one of the first extruded fiber(511) and the second extruded fiber(512), but is not limited thereto. For example, a plurality of materials may be independently received in the extruding apparatus(7) and the nozzle may selectively extrude any one of the received materials according to a user's settings.

For example, the first material, the second material, and the added material may be independently received in the extruding apparatus(7). A user may make an artificial meat by setting a number and a positional arrangement of each of a first nozzle for extruding a first material, a second nozzle for extruding a second material, and a third nozzle for extruding an added material among a plurality of nozzles.

For example, a user may set a number of the third nozzles so that the third extruded fibers are less than to a certain ratio (or more) in a cross section of an artificial meat(5) to adjust a content of medicinal ingredient and nutrient.

In addition, a user may set the material extruded by each nozzle so that a mainstream taste of the artificial meat(5) is based on the first material and the second material. For example, a user may set the material from which each nozzle extrudes so that the third extruded fiber is located between the first extruded fibers and/or the second extruded fibers.

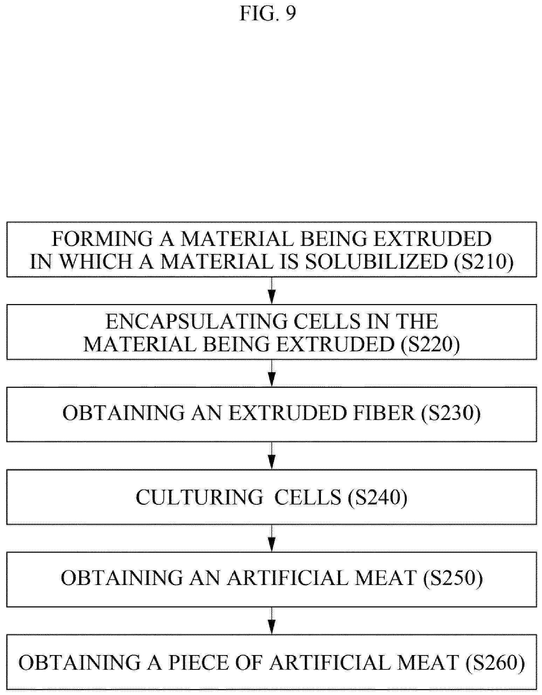

Hereinafter, based on the description of the first embodiment, referring to FIG.9 to 11, a method for making an artificial meat according to a second embodiment of the present invention and an artificial meat made therethrough will be described. For convenience of description, parts similar to those of the first embodiment will be used with the same drawing numerals, and parts common to those of the first embodiment will not be described.

FIG.9 is a flowchart of a method of making an artificial meat according to a second embodiment of the present invention. As shown in FIG. 9, the method of making an artificial meat according to the second embodiment comprises forming a material being extruded in which a material is solubilized(S210), encapsulating cells in the material being extruded(S220), obtaining an extruded fiber(S230), culturing cells(S240), obtaining an artificial meat(S250), and obtaining an artificial meat piece(S260).

In this case, the forming a material being extruded in which a material is solubilized(S210), the obtaining an extruded fiber(S230), the obtaining an artificial meat(S250), and the obtaining an artificial meat piece(S260) may be proceeded in the same or similar way as the forming a material being extruded in which a material is solubilized(S110), the obtaining an extruded fiber(S 130), the obtaining an artificial meat(S 150), and the obtaining an artificial meat piece(S160) of the first embodiment, respectively, and thus the differences will be described below.

In the forming a material being extruded in which a material is solubilized(S210) according to the second embodiment, a user may form the material before gelation to have a complex modulus within a range of 0.01 Pa to 300 Pa. In addition, a user may form a hydrogel that the hydrogel has a complex modulus within the range of 1 Pa to 300 kPa after gelation.

This is because when the complex modulus is low below the above-described range, a hydrogel is too soft and thus it is difficult to extrude. On the contrary, when the complex modulus is higher than the above-described range, cells die in the process of extruding the gel or a cell viability rate lowered in a cell culture process.

In addition, in the forming a material being extruded in which a material is solubilized(S210), a neutralization of the hydrogel may be proceeded to encapsulate the cells in the hydrogel. This is because if cells are encased in a hydrogel that is not in a neutral state, the cells may be killed.

In the encapsulating cells in a material being extruded(S220), cells for culturing are encapsulated in the hydrogel formed in the step of forming a material being extruded in which a material is solubilized(S210).

The encapsulated cells may be largely distinguished into cells cultured to realize a taste of a specific meat (hereinafter, a 'taste-realized cell') and the above-described connective cells. The description of connective cells is omitted as described above.

The taste-realized cell may be an animal cell selected in consideration of type and/or portion of meat to be produced. In actual meat, a taste changes due to factors such as a type of cells constituting it, and a ratio of red muscle fibers and white muscle fibers.

If a user desires to obtain an artificial meat similar to meat of a specific animal, the user may encapsulate cells of a specific animal in a hydrogel. For example, a user may enclose cells of an animal so that the texture, color, mouthfeel, taste, etc. of the artificial meat are similar to that of a specific animal.

In addition, the user may adjust the ratio of cells corresponding to white muscle fibers and cells corresponding to red muscle fibers encapsulated in the gel so that the artificial meat simulates a taste for a specific portion of a specific animal.

For example, taste-realized cells may be provided as cells for a specific portion of a specific animal, myocyte cells, satellte cells, muscle stem cells, fibroblasts, endothelial cells, chondrocyte, oesteocyte, bone marrow/adipose tissue/nasal cavity-derived mesenchymal stem cells, and the like.

In obtaining the extruded fiber(S230), the gel may be extruded within a pressure range for preventing damage to cells encapsulated in the gel during the extrusion process. For example, the pressure at which the extruding apparatus extrudes the gel may be set to 200 kPa or less.

In the culturing the cells(S240), the cells encapsulated in the extruded fiber are cultured according to the culturing conditions of the encapsulated cells. For example, the cells may be cultured by exposing the extruded fiber to a sufficient time under the general culture conditions described above.

Meanwhile, when the connective cells are encapsulated in the hydrogel in the encapsulating the cells in the material being extruded(S220), the culturing the cells(S240) and the obtaining the artificial meat(S250) may be simultaneously proceeded.

Specifically, the user may arrange a plurality of extruded fibers in a bundle form, and then may proceed the culturing the cells(S240) in a state in which they are pressed into a frame for pressing them. At this time, an artificial meat is obtained by plurality of extruded fibers is connected by the cultured connective cells over time.

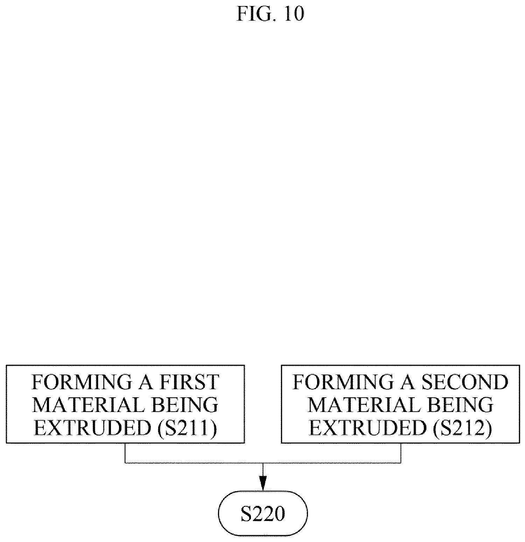

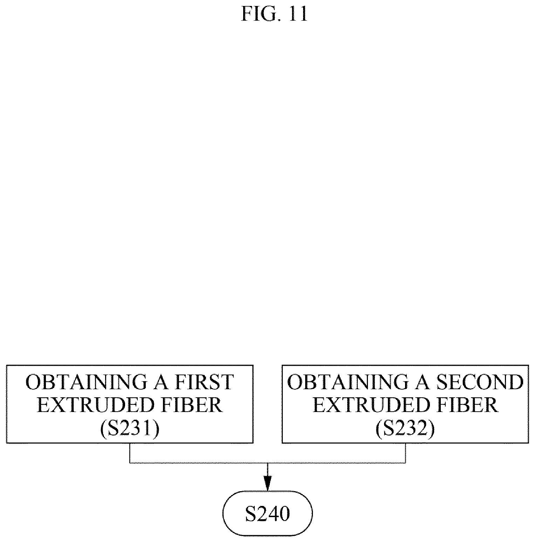

Meanwhile, in the present embodiment, the first extruded fiber and the second extruded fiber may be used so that the artificial meat has marbling. To describe this, referring to FIGS 10 and 11, FIG. 10 is a flowchart of a case in which a step of forming a material being extruded in which a material is solubilized according to a second embodiment of the present invention comprises a forming first material being extruded and a forming second material being extruded. FIG. 11 is a flowchart of a case in which a step of obtaining an extruded fiber according to a second embodiment of the present invention comprises a obtaining a first extruded fiber and a obtaining a second extruded fiber.

The forming the first material being extruded(S211) and the forming the second material being extruded(S212) may be proceeded similarly to the forming the first material being extruded(S111) and the forming the second material being extruded(S112) of the first embodiment described above.

However, unlike the first embodiment, in the second embodiment, after the forming a first material being extruded(S211) and the forming a second material being extruded(S212), cells are encapsulated in a first material being extruded and/or a second material being extruded.

In the obtaining a first extruded fiber(S231) and the obtaining a second extruded fiber(S232) may be proceeded similarly to the obtaining a first extruded fiber() and the obtaining a second extruded fiber(S 132) of the first embodiment described above.

However, in the obtaining a first extruded fiber(S231) and the obtaining a second extruded fiber(S232), an extrusion pressure range may be limited compared to the first embodiment so that the cells are not damaged, and the culturing the cells is proceeded without producing an artificial meat right away.

Meanwhile, as with artificial meat made by method of making an artificial meat according to the first embodiment or similarly, the artificial meat made by the method of making an artificial meat according to the second embodiment also simulates the marbling of the actual meat, and a description thereof will be omitted as described above.

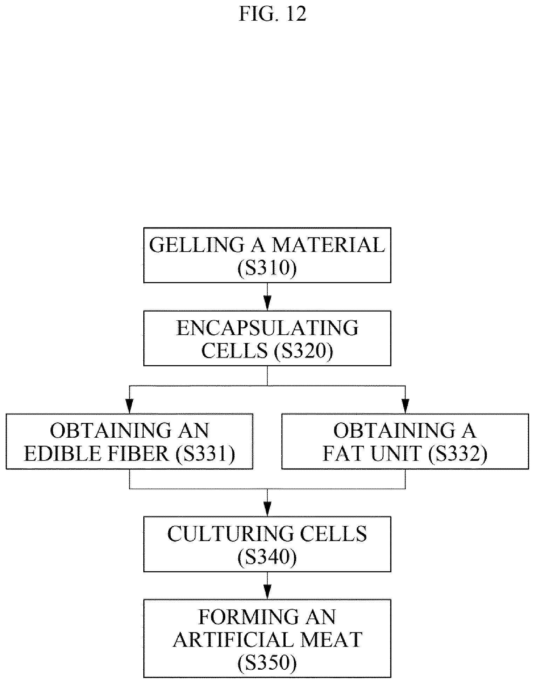

Hereinafter, based on the description of the above-described embodiments, a method of making an artificial meat according to a third embodiment of the present invention and an artificial meat made therethrough will be described with reference to FIG.12 to 15. For convenience of description, parts similar to those of the above-described embodiments are used with the same drawing numerals, and parts common to those of the above-described embodiments are omitted.

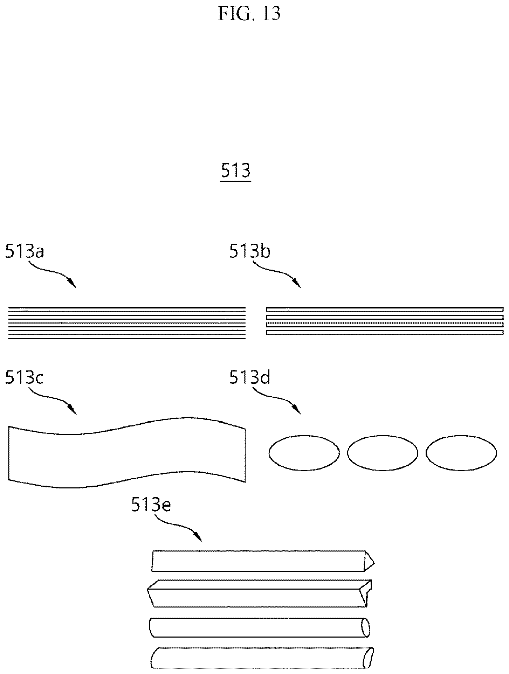

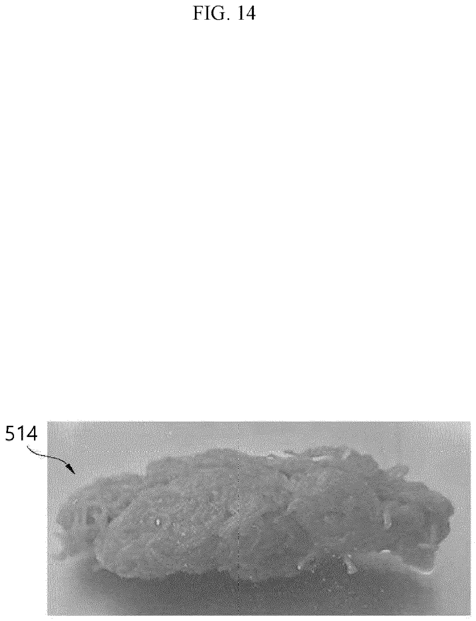

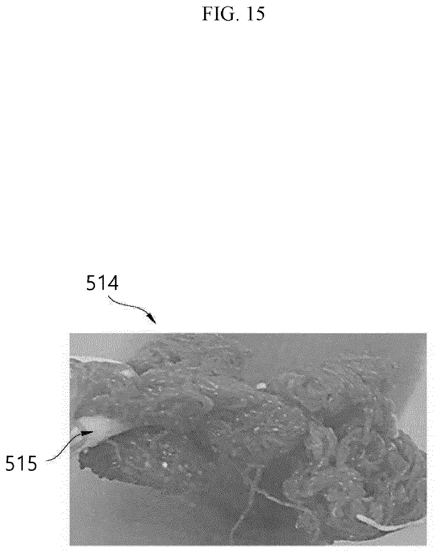

FIG.12 is a flowchart of a method of making an artificial meat according to a third embodiment of the present invention. And FIG.13 is a schematic drawing of examples of a fat unit which may be used in a method of making an artificial meat according to a third embodiment of the present invention. And FIG.14 is a photograph of an edible fiber structure body made according to a third embodiment of the present invention. And FIG. 15 is a photograph of an artificial meat made according to a third embodiment of the present invention.

As shown in FIG.12, the method for making an artificial meat according to the third embodiment of the present invention may comprise a step of gelling a material(S310), encapsulating cells(S320), obtaining an edible fiber(S331), obtaining a fat unit(S332), culturing cells(S340), and forming an artificial meat(S350).

In the gelling a material(S310), the first material being extruded which is processed in a hydrogel state and the second material being extruded which is processed in a hydrogel state are formed in the same or similar to the above-described embodiments.

In the encapsulating cells(S320), taste-realized cells or connective cells may be encapsulated in the first material being extruded and/or the second material being extruded similar to the second embodiment.

In the obtaining an edible fiber(S331), the user made the edible fiber in which the first material being extruded is processed into a fine fiber form. The user may process the edible fibers to have a diameter in the range of 5 µm to 3000 µm.

Unlike the above-described embodiments, the method of making the artificial meat according to the third embodiment is not limited to the method of making an edible fiber as an extrusion method.

For example, in the present embodiment, the first material being extruded may be first thinly applied and crosslinked, and then proceeded by dividing into fine fibers. For example, the first material being extruded cross-linked in a form of thin plate may be divided until it becomes a fine fiber state or may be processed into a fine fiber by entering it into an apparatus similar to a noodle-making machine. Alternatively, a first material being extruded in a gel state may be obtained an edible fiber similar to a fine fiber by receiving it in a gel state in a pre-prepared mold and then exposing it to a crosslinking agent.

In the obtaining a fat unit(S332), a user makes a fat unit in which the second material being extruded is processed into an arbitrary shape. As described above, because the fat part in an actual meat takes an arbitrary shape, when an artificial meat is to be made by manual, it may be efficient to make the fat unit(513) in according to a marbling pattern of an artificial meat to be made in order to shorten the process time.

Continuing with the description with reference to FIG.13, for example, when a user desires to realize a marbling such as uniform and dense points between lean meat, a fat unit in the form of fine fiber(513a) or a fat unit in the form of the fiber(513b) may be disposed in an artificial meat. Here, the fat unit in the form of the fiber(513b) may be formed to have a larger diameter than the fat unit in the form of fine fiber(513a).

In addition, a user may make an artificial meat using a fat unit in the form of fine fiber(513a), a fat unit in the form of the fiber(513b), a fat unit in the form of thin plate(513c), a fat unit in the form of clustered(513d), and/or a fat unit in the form of the fiber that are not circular in cross-section(S513e), according to a pattern of marbling to be realized.

Like or similar to edible fibers, the fat unit(513) may be made in various ways, such as extruding through a nozzle, extruding through a fine gap, processing a second material being extruded which is crosslinked, or using a mold.

The culturing cells(S340) may be proceeded when cells are encapsulated in the first material being extruded or the second material being extruded, which may be proceeded in the same or similar way to the above-described embodiments, and thus a description thereof will be omitted.

In the forming an artificial meat(S350), a user forms an artificial meat based on an edible fiber and/or fat unit.

For example, this step may be proceeded by manual processing of an obtained edible fiber and/or fat unit or may be proceeded by a printer proceeding bio 3D printing.

Hereinafter, for convenience of description, description is made based on a user making an artificial meat having marbling using edible fibers and fat units, but the present embodiment is not limited thereto. For example, when the user desires to make an artificial meat consisting of only a lean meat part, the user may make the artificial meat using only edible fibers, and when the user desires to make an artificial meat consisting of only a fat part, the user may manufacture the artificial meat using only a fat unit.

In the forming an artificial meat, at least one edible fiber is folded or a plurality of edible fibers are arranged in a bundle form to obtain an edible fiber structure(514; see FIG.14) simulating a bundle structure of a muscle fiber. A user may locate at least one fat unit between these edible fiber structures to make an artificial meat with marbling. Here, the marbling may have a different pattern according to how it forms a combination of edible fiber and fat unit.

A user may make an artificial meat having marbling by combining a fat structure(515; see FIG.15) in which at least one fat unit proceeded into a fiber form is folded or a plurality of the fat units is connected in a bundle form and an edible fiber structure(514) which is described above.

When a user proceeds a method of making an artificial meat according to the third embodiment using the 3D printer, the artificial meat may be formed as follows.

In this case, the obtaining an edible fiber(S331) and the obtaining a fat unit(S332) may be proceeded by operating a 3D printer and discharging an edible fiber and the fat unit from the nozzle.

The forming an artificial meat(S350) may be proceeded by making an artificial meat model with the edible fiber and/or fat unit discharged from the 3D printer. For example, the edible fiber and/or fat unit discharged from the printer may be adhered to each other during printing of artificial meat by applying an adhesive to a surface thereof. To this end, the 3D printer may comprise a apparatus for spraying an adhesive, similar to the extruding apparatus(7) according to the second embodiment.

When using a 3D printer, the user may first model an artificial meat model. The artificial meat model may be a model having a pattern by a combination of the edible fiber structure(514) and the fat structure(515). The user may adjust the shape of the marbling shown in the artificial meat by setting different combination patterns of the edible fiber structure(514) and the fat structure(515). Thereafter, when the user inputs the artificial meat model to the 3D printer, the 3D printer may be configured to print the artificial meat based on the input artificial meat model.

On the other hand, the method of making an artificial meat according to the third embodiment may also process the added material and locate it in the artificial meat.

The artificial meat according to the embodiments of the present invention may be applied to a cultured meat, a vegetable substitute meat, an insect protein-based substitute meat, and the like, so that it has advantage of being able to obtain a cultured meat and an artificial meat having characteristics similar to actual meats. In addition, the composition of the materials may be selectively constituted and provided as a customized nutritional food to consumers of various body constitutions. In addition, the materials may contain medicinal ingredients and the like, so that they can be applied to an oral administration type medicine.

In addition, according to the embodiments of the present invention described above, it has advantage of being able to simulate marbling of a specific portion by changing a pattern by a combination of an edible fiber (or a first extruded fiber) and a fat unit (or a second extruded fiber) according to a portion of an actual meat to be simulated.

It will be understood by those skilled in the art to which the present invention belongs that the present invention may be proceeded in other specific forms without changing the technical spirit or essential features. Therefore, it should be understood that the embodiments described above are exemplary in all respects and not limited. The scope of the present invention is indicated by the following claims rather than the detailed description above, and the meaning and scope of the claims and all changes or modified forms derived from the equivalence concept thereof should be construed as being comprised in the scope of the present invention.

## Claims

1. A method of making an artificial meat comprising:
forming a first material being extruded in which a material for a taste of a lean meat is solubilized;
obtaining at least one first extruded fiber in which the first material being extruded is extruded to have a length direction corresponding to an extrusion direction;
forming a second material being extruded in which a material for a taste of fat is solubilized;
obtaining at least one second extruded fiber in which the second material being extruded is extruded to have a length direction; and
obtaining the artificial meat in which the at least one first extruded fiber and the at least one second extruded fiber are connected along the length direction.

2. The method of claim 1,
wherein the obtaining at least one first extruded fiber comprises extruding the first material being extruded using at least one first nozzle, and
wherein the obtaining at least one second extruded fiber comprises extruding the second material being extruded using at least one second nozzle.

3. The method of claim2,
wherein the artificial meat is configured to have a pattern formed by the at least one first extruded fiber and the at least one second extruded fiber on a cross section cut so as to intersect in the length direction, and
wherein the pattern is determined based on an arrangement of the at least one first nozzle and the at least one second nozzle.

4. The method of claim3, further comprising:
obtaining at least one piece of artificial meat having marbling based on the pattern when the artificial meat is cut to intersect the length direction.

5. The method of claim2,
wherein the obtaining the first extruded fiber comprises obtaining cross-linked the first material being extruded by spraying a cross-linking agent on the first material being extruded that has passed through the first nozzle, and
wherein the obtaining the second extruded fiber comprises obtaining cross-linked the second material being extruded by spraying the cross-linking agent on the second material being extruded that has passed through the second nozzle.

6. The method of claim2,
wherein the obtaining the first extruded fiber comprises obtaining cross-linked the first material being extruded by immersing the first material being extruded that has passed through the first nozzle in crosslinking agent, and
wherein the obtaining the second extruded fiber comprises obtaining cross-linked the second material being extruded by immersing the second material being extruded that has passed through the second nozzle in crosslinking agent.

7. The method of claim2,
wherein the obtaining the first extruded fiber comprises obtaining cross-linked the first material being extruded by exposing the first material being extruded that has passed through the first nozzle to an environment for gelation, and
wherein the obtaining the second extruded fiber comprises obtaining cross-linked the second material being extruded by exposing the second material being extruded that has passed through the second nozzle to an environment for gelation.

8. The method of claim 1,
wherein the obtaining the artificial meat comprises connecting the at least one first extruded fiber and the at least one second extruded fiber along the length direction by applying an adhesive to the at least one first extruded fiber and the at least one second extruded fiber.

9. The method of claim 1,
wherein the obtaining the artificial meat comprises connecting the at least one first extruded fiber and the at least one second extruded fiber along the length direction by immersing the first extruded fiber and the second extruded fiber in an adhesive.

10. The method of claim 1,
wherein the at least one first extruded fiber and the at least one second extruded fiber are connected by cultured cells, and
wherein the cultured cells are cultured in a state where the at least one first extruded fiber and the at least one second extruded fiber are arranged along the length direction.

11. The method of claim 1, further comprising:
forming a third material being extruded in which a material for additives including at least one nutrient and medicinal ingredient is solubilized; and
obtaining at least one third extruded fiber in which the third material being extruded to have the length direction,
wherein the at least one first extruded fiber, the at least one second extruded fiber and the at least one third extruded fiber are connected along the length direction.

12. A method of making an artificial meat comprising:
obtaining an edible fiber in which a material for a taste of lean meat is processed into a fiber form; and
forming the artificial meat including a structure similar to a bundle structure of muscle fibers in an actual meat by folding at least one edible fiber or connecting a plurality of the edible fibers in a bundle form.

13. The method of claim 12, further comprising:
obtaining a fat unit in which a material for a taste of fat is gelled or crosslinked,
wherein the forming the artificial meat comprises
combining the at least one edible fiber and the at least one fat unit; and
forming the artificial meat which is configured to have a marbling of an actual meat based on a pattern formed by the combination.

14. The method of claim 13,
wherein the fat unit is obtained by being processed in a fiber form,
wherein the artificial meat is formed by combination of the edible fiber structure and the fat structure,
wherein the edible fiber structure is configured to fold the at least one of the edible fibers or connect a plurality of the edible fibers in a bundle form, and
wherein the fat structure is configured to fold the at least one of the fat units or connect a plurality of the fat units in the bundle form.

15. The method of claim 13,
wherein the forming the artificial meat comprises
changing a pattern formed by a combination of the edible fiber and the fat unit based on a portion of the actual meat to be simulated; and
forming the artificial meat which is configured to have a marbling based on the pattern.

16. The method of claim 12, further comprising:
encapsulating cells of a pre-determined animal in the material for a taste of the lean meat such that characteristics of the artificial meat are similar to characteristics of the meat from the pre-determined animals.

17. An artificial meat comprising:
at least one first extruded fiber having length direction corresponding to an extrusion direction which is formed by extruding a first material being extruded in which a first material of the artificial meat is solubilized; and
at least one of second extruded fibers having length direction corresponding to an extrusion direction which is formed by extruding a second material being extruded in which a second material of the artificial meat is solubilized,
wherein the artificial meat is formed by connecting at least one of the first extruded fibers and at least one of the second extruded fibers along the length direction.

18. An artificial meat comprising at least one edible fiber formed by processing a material for a taste of lean meat into a fiber form,
wherein the artificial meat is formed by folding the at least one edible fiber or connecting a plurality of the edible fibers in a bundle form such that a structure of the artificial meat is similar to a bundle structure of muscle fibers of actual meat.

19. The artificial meat of claim 18, further comprising:
a fat unit in which a material for a taste of fat is gelled or crosslinked, and
wherein the artificial meat is configured to have a marbling based on a pattern which is formed by a combination of the at least one of edible fiber and at least one fat unit.
